# EUROPÄISCHE PATENTANMELDUNG

(11) **EP 3 872 462 A1**
(43) Veröffentlichungstag der Anmeldung: **01.09.2021**
(21) Anmeldenummer: 21155024.9
(22) Anmeldetag: 03.02.2021
(51) Int. Cl.: G01J 1/02, G01J 1/06, G01J 1/42, G01J 5/00, G01J 5/04, G01J 5/06, G01J 5/08, G01J 1/04, F23N 5/08

(54) **WÄRMEZELLE MIT OPTISCHER SENSOREINHEIT**

(30) Priorität: 18.02.2020 DE 102020104195
(71) Anmelder: Vaillant GmbH, 42859 Remscheid (DE)
(72) Erfinder: Sinsteden, Claudia, 42657 Solingen (DE); Paul, Michael, 58332 Schwelm (DE); Badenhop, Thomas, 42499 Hückeswagen (DE); Grabe, Jochen, 51688 Wipperfürth (DE); Hopf, Matthias, 42855 Remscheid (DE); Oerder, Bodo, 42897 Remscheid (DE); Reinert, Andreas, 58455 Witten (DE); Richter, Klaus, 42855 Remscheid (DE); Wagner, Mark, 42929 Wermelskirchen (DE)
(74) Vertreter: Popp, Carsten

(57) **Zusammenfassung**

Die Erfindung betrifft eine Wärmezelle mit einer Brennkammer 4, einer Fluidleitung 2 zum Führen eines Fluids und einer optischen Sensoreinheit 1 zum Messen der durch die Verbrennung bewirkten optischen Emissionen aus der Brennkammer. Erfindungsgemäß ist die Sensoreinheit außerhalb der Brennkammer 4 angeordnet ist. Die Brennkammer 4 umfasst ein Schauglas 3, durch das Licht aus der Brennkammer auf die Sensoreinheit 1 fallen kann. Die Sensoreinheit 1 ist so angeordnet ist, dass sie vom durch die Fluidleitung 2 strömenden Fluidstrom kühlbar ist.

## Beschreibung

Die Erfindung betrifft Wärmezelle eines Heizgerätes zum Beheizen eines Gebäudes mit einer optischen Sensoreinheit.

Zur Flammenüberwachung hinsichtlich einer vorhandenen Flamme und hinsichtlich der Verbrennungsqualität bietet es sich an, die Emissionen der Flamme im sichtbaren und nicht sichtbaren Spektralbereich mit einer optischen Sensoreinheit zu erfassen und auszuwerten.

Dabei sind die hitzeempfindlichen Sensoreinheiten der Wärme des Verbrennungsprozesses ausgesetzt. Daher können diese Sensoreinheiten nicht an eine Brennkammer adaptiert werden.

Es ist daher Aufgabe der Erfindung, eine Wärmezelle bereitzustellen, bei der eine hitzeempfindlicher Sensoreinheit nicht der Wärme des Verbrennungsprozesses ausgesetzt ist.

Diese Aufgabe wird erfindungsgemäß mit einer Wärmezelle nach Anspruch 1 gelöst.

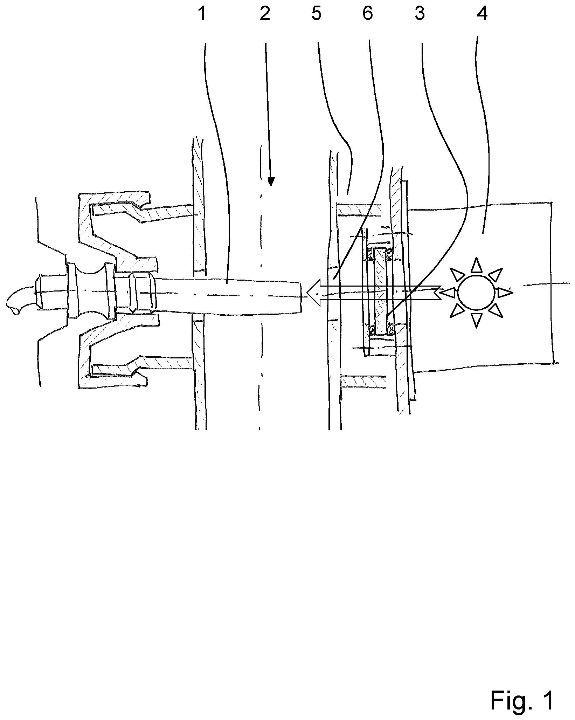

Es folgt die Beschreibung anhand der Figur 1. Die Figur 1 zeigt ein mögliches Ausführungsbeispiel, die Erfindung ist nicht beschränkt auf dieses Beispiel. Erfindungsgemäß wird die optische Sensoreinheit 1 nicht unmittelbar an die Brennkammer adaptiert, sondern die Sensoreinheit 1 ist mit einem Abstand außerhalb der Brennkammer 4 vorgesehen. Unter optisch wird hier das sichtbare sowie das nichtsichtbare Licht verstanden. Die Sensoreinheit 1 misst die Intensität des einfallenden Lichts in einem bestimmten oder unbestimmten Spektralbereich. Die Brennkammer 4 weist ein temperaturstabiles Schauglas 3 auf, das lichtdurchlässig für den für die Messung relevanten Spektralbereich der als Pfeil dargestellten Lichtemission der Flamme ist. Bevorzugt ist das Schauglas zumindest teilweise undurchlässig für den Infrarotbereich. Ebenfalls bevorzugt ist das Schauglas durchlässig für den UV-Bereich. Dieser Abstand optional ist mit einer für Licht undurchlässigen Abschirmung 5 gegen externe Lichtquellen abgedeckt. Dies kann durch außerhalb des Lichtweges vorgesehene separate Blenden oder durch eine entsprechende Gestaltung der umliegenden Bauteile erfolgen, die dann denselben Zweck der Abschirmung erfüllen. Ist nicht mit externen Lichtquellen zu rechnen, kann die auf Abschirmung 5 verzichtet werden.

Erfindungsgemäß wird die Sensoreinheit von einem Fluidstrom umströmt und von diesem gekühlt. Dies kann die der Brennkammer zuzuführende Verbrennungsluft, Umgebungsluft oder des der Brennkammer 4 zugeführte zu beheizende Wärmeträgermedium, in der Regel Wasser, sein. Diese Fluid wird durch die Fluidleitung 2 geführt. Abhängig von der Art des Fluids weist die Fluidleitung 2 am Durchtritt 6 eine Öffnung oder ein weiteres Schauglas auf.

In einer alternativen Ausführungsform ist die Sensoreinheit 1 außerhalb der Fluidleitung 2 vorgesehen und mit dieser thermisch leitend verbunden, so dass die Sensoreinheit indirekt vom Fluid gekühlt wird. Alternativ kann die Sensoreinheit auch innerhalb der Fluidleitung 2 mit dieser thermisch verbunden sein. Dies hat den Vorteil, dass bei kurzzeitigen Unterbrechungen des Fluidstroms weiterhin eine Kühlung der Sensoreinheit 1 durch die thermische Masse der Fluidleitung 2 sichergestellt ist.

In einer Weiterbildung der Erfindung umfasst die Sensoreinheit einen optischen Sensor und eine mit dem Sensor thermisch verbundene Wärmeleiteinrichtung. Diese Wärmeleiteinrichtung kann ein Bauteil aus einem gut wärmeleitenden Material oder eine Heatpipe sein. Im einfachsten Fall ist die Wärmeleiteinrichtung ein Kühlblech oder Kühlkörper. Im Fall einer Heatpipe ist diese für den Wärmetransport unterhalb der zulässigen Betriebstemperatur der Sensoreinheit geeignet. Erfindungsgemäß ist der Wärmeleiteinrichtungs-Teil durch den Fluidstrom kühlbar, während der Sensorteil des Sensorsystems auch räumlich getrennt von der Fluidleitung 2 vorgesehen werden kann.

In einer alternativen Weiterbildung umfasst die Sensoreinheit ein Phasenwechselmaterial, das thermisch mit dem Sensor verbunden ist. Die Phasenwechseltemperatur des Phasenwechselmaterials ist dabei so gewählt, dass diese kleiner ist als die zulässige Betriebstemperatur des Sensors ist und größer als die üblich auftretende Fluidtemperatur des durch die Fluidleitung 2 geführten Fluids ist. Dadurch wird bewirkt, dass die Sensoreinheit weiter gekühlt wird auch, wenn das Fluid in der Fluidleitung zeitweise eine höhere Temperatur als die zulässige Temperatur der Sensoreinheit aufweist oder bei Unterbrechungen des Fluidstroms. Das Phasenwechselmaterial kann organischer oder anorganischer Natur sein. Diese Weiterbildung ist optional mit der vorgenannten Weiterbildung kombiniert.

### Bezugszeichenliste

- 1: Optische Sensoreinheit
- 2: Fluidleitung
- 3: Schauglas
- 4: Brennkammer
- 5: Abschirmung
- 6: Durchtritt

## Patentansprüche

1. Wärmezelle, umfassend eine Brennkammer (4), eine Fluidleitung (2) zum Führen eines Fluids und eine optischen Sensoreinheit (1) zum Messen der durch die Verbrennung bewirkten optischen Emissionen aus der Brennkammer, **dadurch gekennzeichnet, dass** die Sensoreinheit außerhalb der Brennkammer (4) angeordnet ist, dass die Brennkammer (4) ein Schauglas (3) umfasst, durch das Licht aus der Brennkammer auf die Sensoreinheit (1) fallen kann, und dass die Sensoreinheit (1) so angeordnet ist, dass sie vom durch die Fluidleitung (2) strömenden Fluidstrom kühlbar ist.

2. Wärmezelle nach Anspruch 1, **dadurch gekennzeichnet, dass** die Sensoreinheit zumindest teilweise innerhalb der Fluidleitung (2) so vorgesehen ist, dass die vom Fluid zumindest teilweise umströmbar ist.

3. Wärmezelle nach Anspruch 1 oder 2, **dadurch gekennzeichnet, dass** die Sensoreinheit (1) zumindest teilweise thermisch mit der Fluidleitung (2) so verbunden ist, dass die vom Fluid zumindest teilweise zumindest indirekt kühlbar ist.

4. Wärmezelle nach einem der Ansprüche 1 bis 3, **dadurch gekennzeichnet, dass** das Schauglas (3) durchlässig für Licht im UV-Spektrum ist.

5. Wärmezelle nach einem der Ansprüche 1 bis 4, **dadurch gekennzeichnet, dass** das Schauglas (3) undurchlässig für Licht sichtbaren Spektrum ist.

6. Wärmezelle nach einem der Ansprüche 1 bis 5, **dadurch gekennzeichnet, dass** das Schauglas (3) undurchlässig für Licht im Infrarot-Spektrum ist.

7. Wärmezelle nach einem der vorhergehenden Ansprüche, **dadurch gekennzeichnet, dass** eine Abschirmung des Strahlengangs vom Schauglas (3) zur Sensoreinheit (1) gegen Umgebungslicht vorgesehen ist.

8. Wärmezelle nach einem der Ansprüche 1 bis 7, **dadurch gekennzeichnet, dass** die Fluidleitung (2) ausgebildet ist zum Leiten von Verbrennungsluft.

9. Wärmezelle nach einem der Ansprüche 1 bis 7, **dadurch gekennzeichnet, dass** die Fluidleitung (2) ausgebildet ist zum Leiten von Umgebungsluft.

10. Wärmezelle nach einem der Ansprüche 1 bis 7, **dadurch gekennzeichnet, dass** die Fluidleitung (2) ausgebildet ist zum Leiten des der Brennkammer (4) zugeführten zu erwärmenden Wärmeträgermediums.

11. Wärmezelle nach einem der vorhergehenden Ansprüche, **dadurch gekennzeichnet, dass** die Sensoreinheit (1) einen optischen Sensor und eine mit dem optischen Sensor thermisch verbundene Wärmeleiteinrichtung umfasst und dass die Wärmeleiteinrichtung durch den Fluidstrom kühlbar ist.

12. Wärmezelle nach Anspruch 11, **dadurch gekennzeichnet, dass** der Sensor des Sensorsystems (1) räumlich getrennt von der Fluidleitung (2) vorgesehen ist.

13. Wärmezelle nach einem der vorhergehenden Ansprüche, **dadurch gekennzeichnet, dass** die Sensoreinheit (1) einen optischen Sensor und ein mit dem optischen Sensor thermisch verbundenes Phasenwechselmaterial, das thermisch mit dem Sensor verbunden ist, umfasst.
